# EUROPÄISCHE PATENTSCHRIFT

(11) **EP 2 188 449 B1**
(45) Veröffentlichungstag und Bekanntmachung des Hinweises auf die Patenterteilung: **13.03.2013**
(21) Anmeldenummer: 08804142.1
(22) Anmeldetag: 12.09.2008
(51) Int. Cl.: E01B 9/30, E01B 9/38

(54) **SYSTEM ZUM BEFESTIGEN EINER SCHIENE AUF EINEM EBENEN FESTEN UNTERGRUND**
SYSTEM FOR FASTENING A RAIL ON A LEVEL, SOLID UNDERLYING SURFACE
SYSTÈME DE FIXATION D'UN RAIL SUR UN SOUBASSEMENT FIXE PLAN

(30) Priorität: 14.09.2007 DE 102007044055
(43) Veröffentlichungstag der Anmeldung: 26.05.2010
(73) Patentinhaber: Vossloh-Werke GmbH, 58791 Werdohl (DE)
(72) Erfinder: BÖSTERLING, Winfried, 58809 Neuenrade (DE); HUNOLD, André, 58636 Iserlohn (DE)
(74) Vertreter: Cohausz & Florack
(86) Internationale Anmeldenummer: PCT/EP2008/062179
(87) Internationale Veröffentlichungsnummer: WO 2009/037204

(56) Entgegenhaltungen:
- EP-A- 0 794 289
- WO-A-2007/082553
- DE-B1- 2 600 416
- DE-U1- 8 505 011

## Beschreibung

Die Erfindung betrifft ein System zum Befestigen einer Schiene auf einem ebenen festen Untergrund mit einer Führungsplatte zum seitlichen Abstützen der zu befestigenden Schiene, mit einem Federelement, welches auf der Führungsplatte abgestützt ist und mindestens einen Federarm aufweist, der eine elastische Haltekraft auf den Fuß der Schiene ausübt, und mit einem Spannmittel zum Spannen des Federelements, wobei ein Stützwinkel vorgesehen ist, der mit dem festen Untergrund verbindbar ist und eine Anlagefläche besitzt, gegen die die Führungsplatte auf ihrer vom Schienenfuß abgewandten Seite abgestützt ist. Ein solches System ist aus der WO 2007/082553 bekannt.

Feste Untergründe, wie Tragplatten, Schwellen und dergleichen, auf denen Systeme der erfindungsgemäßen Art montiert werden, werden auch als "feste Fahrbahn" bezeichnet. Sie weisen im Gegensatz zu einem aus losem Schotter gebildeten Gleisoberbau keine eigene Nachgiebigkeit auf. Typischerweise sind die festen Fahrbahnen durch Betonplatten gebildet, auf denen ebenfalls aus Beton gegossene Schwellen aufgelegt sein können, welche wiederum die Schienen tragen.

Die seitliche Abstützung der Schienen auf einem solchen festen Untergrund erfolgt in der Regel mit Hilfe von Stützeinrichtungen, die beidseits des Schienenfußes zwischen dem Schienenfuß und jeweils einem seitlich mit Abstand zum Schienenfuß angeordneten Anschlag positioniert werden. Dieser Anschlag ist zu diesem Zweck üblicherweise in Form einer Stützschulter oder Ähnlichem an den jeweiligen festen Untergrund angeformt.

So weisen die typischerweise zur Befestigung von Schienen auf einer festen Fahrbahn verwendeten Betonschwellen in der Regel seitliche Anschlagschultern auf, gegen die die zum seitlichen Führen der jeweiligen Schiene bestimmten Führungsplatten abgestützt sind. Durch geeignete Befestigungselemente, in der Regel Schrauben, werden diese Führungsplatten entweder unmittelbar am festen Untergrund oder der jeweiligen Schwelle fixiert. Ein entsprechendes System ist in der Praxis beispielsweise unter der Bezeichnung "System 300" bekannt.

Üblicherweise werden die Befestigungselemente zusätzlich zum Spannen eines Federelements genutzt, das eine in Richtung des festen Untergrunds gerichtete Haltekraft auf den Schienenfuß der zu befestigenden Schiene ausübt. Abhängig von der Formgebung des Untergrunds und der eingesetzten Befestigungsmittel werden zusätzliche Unterleg- und Befestigungsmittel zum ordnungsgemäßen Ausrichten und Halten der Schienen benötigt.

Auf Fahrbahnoberflächen, die eben ausgebildet sind, also keine Anschlagschultern zum seitlichen Abstützen der Führungsplatten bieten, lassen sich Befestigungssysteme der voranstehend beschriebenen Art nicht einsetzen.

Um dieses Problem zu lösen, ist in der eingangs bereits erwähnten WO 2007/082553 A1 vorgeschlagen worden, für die seitliche Abstützung der für die seitliche Führung der Schiene jeweils erforderlichen Führungsplatte einen Stützwinkel zu verwenden, der mit dem festen Untergrund verschraubbar ist und eine Anlagefläche besitzt, gegen die die Führungsplatte auf ihrer vom Schienenfuß abgewandten Seite abgestützt ist. Der Stützwinkel nimmt im Betrieb die von der Schiene ausgehenden und von der Führungsplatte übertragenen Querkräfte auf. Mit dem Stützwinkel ist es somit auf einfache Weise möglich, ein Befestigungssystem auf einer ebenen Oberfläche zu montieren, ohne dass dazu dort eine gesonderte Anschlagschulter oder Vergleichbares ausgebildet sein müssen. In der Praxis erweist es sich allerdings als aufwändig, die in konventioneller Weise aus einem Eisenwerkstoff gefertigten Stützwinkel zu montieren.

Vor diesem Hintergrund bestand die Aufgabe der Erfindung darin, ein System zum Befestigen von Schienen zu schaffen, das bei einfacher Handhabung eine optimal sichere und praxisgerechte Abstützung der Schiene auf einem ebenen festen Untergrund erlaubt.

Diese Aufgabe ist erfindungsgemäß durch ein gemäß Anspruch 1 gekennzeichnetes System gelöst worden. Vorteilhafte Ausgestaltungen dieses Systems sind in den auf Anspruch 1 rückbezogenen Ansprüchen angegeben.

Gemäß der Erfindung sind die bei einem System der eingangs angegebenen, in der WO 2007/082553 A1 beschriebenen Art verwendeten Stützwinkel aus Kunststoff hergestellt. Überraschend hat sich dabei herausgestellt, dass solche Kunststoffwinkel trotz ihres auf den ersten Blick geringen Kraftaufnahmevermögens ausreichen, um die Winkelführungsplatten gegen die in der Praxis auftretenden Querkräfte abzustützen.

Dabei erlauben die erfindungsgemäß aus Kunststoff bestehenden Stützwinkel eine besonders materialschonende Einleitung der im Betrieb auftretenden Kräfte. Gleichzeitig lässt sich durch die Verwendung eines Kunststoffs für die Herstellung der Stützwinkel verhindern, dass über den Stützwinkel eine elektrische Verbindung zwischen Schiene und dem Untergrund zu Stande kommt. Durch die Verwendung von Kunststoffen für die Herstellung der Stützwinkel kann darüber hinaus eine deutliche Gewichtsersparnis erzielt werden.

Als Kunststoffmaterial für die Herstellung der Stützwinkel sind beispielsweise Polyolefine oder Polyamid geeignet.

Die Stützwinkel können mit Verstärkungsrippen versehen sein, um die im Betrieb auftretenden Kräfte besonders sicher aufnehmen zu können.

Die Festigkeit der erfindungsgemäß aus einem Kunststoff hergestellten Stützwinkel kann dadurch weiter erhöht werden, dass das Kunststoffmaterial Verstärkungsfasern enthält.

Eine besonders gute Übertragung der vom jeweiligen Stützwinkel aufgenommenen Kräfte auf den festen Untergrund ohne die Notwendigkeit, den Untergrund gesondert dazu vorzubereiten, kann dadurch erreicht werden, dass in die der Oberfläche des festen Untergrunds zugeordnete Aufstandfläche des Stützwinkels eine geriffelte raue Struktur eingeformt ist. Die raue Struktur kann bevorzugt im Querschnitt sägezahnartig geformt sein, um die jeweiligen Querkräfte besonders sicher in den Untergrund einzuleiten. Zu diesem Zweck können in die Aufstandfläche des Stützwinkel parallel zur Anlagefläche verlaufende linienförmige Vertiefungen eingeformt sein.

Alternativ oder ergänzend zu einer gezielten Aufrauung der dem festen Untergrund zugeordneten Aufstandfläche des Stützwinkels kann auch eine zwischen der Aufstandfläche des Stützwinkels und der Oberfläche des festen Untergrunds positionierte, den Reibungskoeffizienten zwischen Aufstandfläche des Stützwinkels und Oberfläche des festen Untergrunds erhöhende Zwischenlage vorgesehen sein. Um deren Montage so einfach wie möglich zu machen, kann die Zwischenlage bereits bei der Vorfertigung des Stützwinkels fest mit der Aufstandfläche des Stützwinkels verbunden sein.

Für die Verschraubung des Stützwinkels auf dem festen Untergrund kann der Stützwinkel eine Durchgangsöffnung für eine Befestigungsschraube besitzen. Eine besonders einfache, bevorzugt automatisch durchführbare Montage lässt sich dabei dadurch durchführen, dass ein aus einem elastischen Kunststoffmaterial gefertigtes Spannelement vorgesehen ist, das in Montagestellung die durch die Durchgangsöffnung gesteckte Schraube mit einer gegen die von der Schraube ausgeübte Spannkraft gerichtete Rückstellkraft beaufschlagt. Dieses Spannelement sitzt dabei bevorzugt verliersicher gehalten unmittelbar in der jeweiligen Durchgangsöffnung. Bei Verwendung eines solchen Spannelements werden die zum Verspannen der Elemente der bekannten Befestigungssysteme üblicherweise eingesetzten, oft umständlich zu handhabenden Federringe nicht mehr benötigt.

Um die Position eines erfindungsgemäß eingesetzten Stützwinkels auf einfache Weise an die Position der Schiene bzw. der zwischen Schiene und Stützwinkel jeweils vorhandenen Führungsplatte anpassen zu können, können an dem Stützwinkel Mittel vorhanden sein, welche eine Befestigung des Stützwinkels in einer Position relativ zu der zu befestigenden Schiene erlauben, in der die Anlagefläche des Stützwinkels unter einem Winkel zur Längsachse der Schiene ausgerichtet ist. Diese Einstellmittel können durch zwei in den Stützwinkel eingeformte Durchgangsöffnungen gebildet sein, durch die jeweils eine Befestigungsschraube derart steckbar ist, dass die eine Schraube einen sich von der anderen Schraube unterscheidenden Abstand zu der Anlagefläche des Stützwinkels besitzt.

Ebenfalls zum einfachen Anpassen der Position eines erfindungsgemäß eingesetzten Stützwinkels an die jeweilige Position der Schiene bzw. der Führungsplatte kann es vorteilhaft sein, an dem Stützwinkel ein Mittel zum Einstellen seiner Position in einer normal zu seiner Anlagefläche ausgerichteten Richtung vorzusehen. In der Praxis kann dieses Mittel beispielsweise als Exzenterbuchse oder Zahnscheibe, jeweils bevorzugt aus Kunststoff hergestellt, verwirklicht werden.

Eine andere besonders praxisgerechte Möglichkeit, fertigungs- und montagebedingte Ungenauigkeiten der Zuordnung von Stützwinkel und Schiene bzw. Führungsplatte auszugleichen, besteht darin, dass die Führungsplatte über ein in Längsrichtung der zu befestigenden Schiene spitz zulaufendes Keilelement gegen die Anlagefläche des Stützwinkels abgestützt ist. Die Anordnung eines solchen Keilelements zwischen Führungsplatte und Stützwinkel erlaubt es, auch größere Fehlpositionierungen von Stützwinkel und Führungsplatte auszugleichen, ohne dass dazu eine gesondert angepasste Führungsplatte erforderlich ist. Vielmehr erfolgt bei dieser Ausgestaltung der Erfindung der Ausgleich jeweils alleine über das Verschieben des Keilelements.

Ein wesentlicher Vorteil der Erfindung besteht in dieser Hinsicht darin, dass die Führungsplatte einheitlich mit einer gleichmäßigen Wandstärke ausgeführt werden kann. Dies führt nicht nur zu einem minimierten Gewicht, sondern ermöglicht auch eine besonders gleichmäßige Einleitung der von der Führungsplatte aufgenommenen Kräfte in das Keilelement und von diesem auf den Stützwinkel. Infolge der gleichmäßigen Belastung kann die Führungsplatte besonders klein und gewichtsreduziert ausgelegt werden.

Um eine optimale Anlage von Stützwinkel und Führungsplatte an dem Keilelement zu gewährleisten, sollte das Keilelement eine erste der Führungsplatte zugeordnete Anlagefläche und eine dem Stützwinkel zugeordnete zweite Anlagefläche besitzen, die mit der ersten Anlagefläche einen spitzen Winkel einschließt.

Praktische Versuche haben ergeben, dass sich eine besonders gute Wirkung eines erfindungsgemäß eingesetzten Keilelements ergibt, wenn die Anlageflächen des Keilelements einen Winkel von 5 - 15 ° einschließen.

Ein sicherer Halt des Keilelements in der bei der Montage jeweils eingestellten Position kann dadurch erreicht werden, dass die der Führungsplatte zugeordnete Anlagefläche mindestens einen Vor- und/oder Rücksprung aufweist, der formschlüssig mit mindestens einem korrespondierend geformten Vor- und/oder Rücksprung verkoppelbar ist, der an der der betreffenden Anlagefläche des Keilelements zugeordneten Anlagefläche der Führungsplatte geformt ist. Bevorzugt sind dabei mehr als ein Vor- und/oder Rücksprung an der der Führungsplatte zugeordneten Anlagefläche ausgebildet. Indem die Führungsplatte und das Keilelement formschlüssig ineinandergreifend montiert werden und die Führungsplatte dabei gegen den festen Untergrund verspannt wird, wird die formschlüssige Verkoppelung von Keilelement und Führungsplatte von einer kraftschlüssigen, durch die von der Führungsplatte auf das Keilelement ausgebübten Spannkräfte bewirkte Verbindung überlagert, welche ein selbsttätiges Lösen der Verbindung von Keilelement und Führungsplatte verhindert.

Besonders günstige Gebrauchseigenschaften eines erfindungsgemäßen Systems ergeben sich in diesem Zusammenhang dann, wenn die Vor-und/oder Rücksprünge im Montagezustand des Keilelements parallel zur Oberseite des ebenen festen Untergrunds verlaufen.

Die Effektivität der Beaufschlagung des Keilelements mit der von der Führungsplatte übertragenen Haltekraft kann dadurch verbessert werden, dass an der Führungsplatte ein Vorsprung ausgebildet ist, der in der Montagestellung auf der freien Oberseite des Keilelements aufliegt.

Ist es für eine sichere Führung des jeweiligen Schienenfahrzeugs auf der mit dem erfindungsgemäßen System zu befestigenden Schiene erforderlich, die Schiene in einem gewissen Umfang schrägzustellen, so kann dies bei einem erfindungsgemäßen System dadurch bewerkstelligt werden, dass eine Grundplatte vorgesehen ist, über die die zu befestigende Schiene auf dem festen Untergrund abstützbar ist, wobei diese Grundplatte eine dem festen Untergrund zugeordnete Aufstandfläche und eine der Unterseite des Schienenfußes der zu befestigenden Schiene zugeordnete Stützfläche aufweist und die Stützfläche im Querschnitt betrachtet unter einem Winkel gegenüber der Aufstandfläche geneigt ausgerichtet ist.

Besonders im Fall, dass eine Grundplatte vorhanden ist, kann an der der zu befestigenden Schiene zugeordneten Seite der Führungsplatte ein Vorsprung ausgebildet sein, der im Montagezustand die Grundplatte oder den Schienenfuß untergreift. Dieser Vorsprung verhindert besonders sicher und auf dennoch einfache Weise ein Abheben der Führungsplatte unter ungünstigen Betriebsbedingungen. Im Fall, dass eine elastische Zwischenlage vorgesehen ist, auf der die Grundplatte im fertig montierten Zustand des erfindungsgemäßen Systems liegt, kann zu diesem Zweck an der Zwischenlage eine Ausnehmung ausgebildet sein, in die der Vorsprung in Montagestellung greift.

Nachfolgend wird die Erfindung anhand einer ein Ausführungsbeispiel darstellenden Zeichnung näher erläutert. Es zeigen:

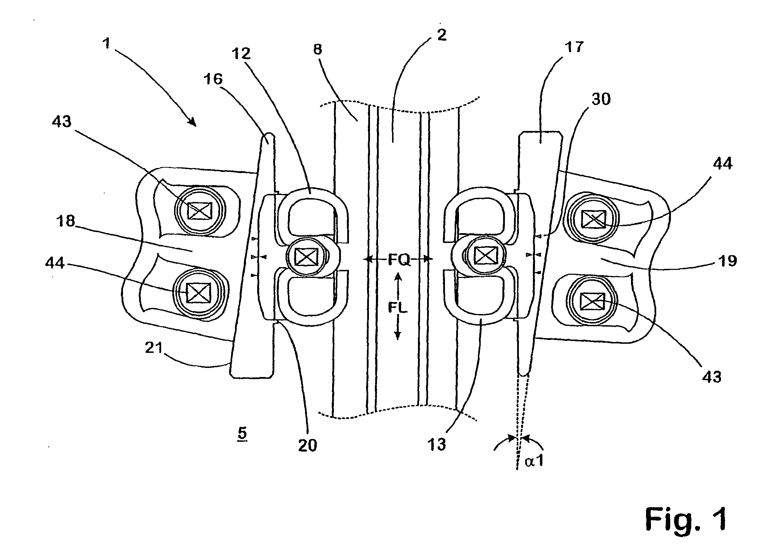

- Fig. 1: ein System zum Befestigen einer Schiene in einer Ansicht von oben;

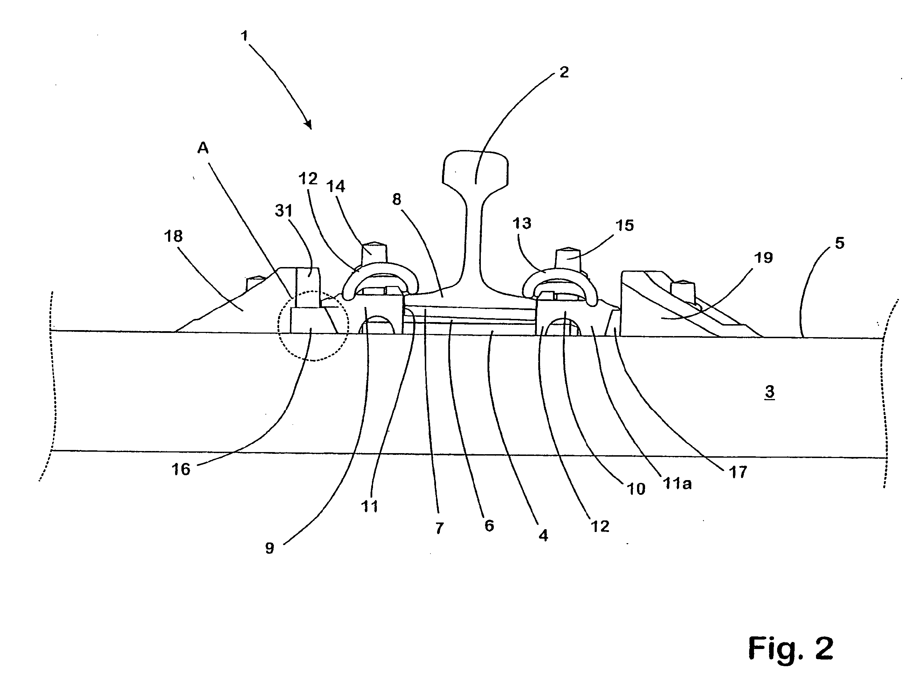

- Fig. 2: das System gemäß Fig. 1 in einer frontalen, teilgeschnittenen Ansicht;

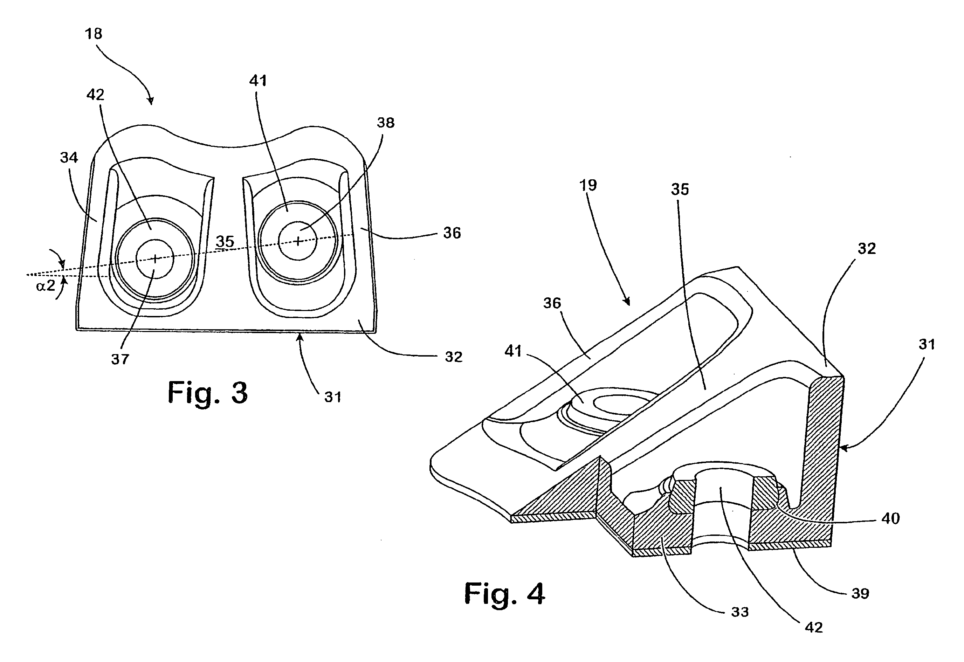

- Fig. 3: einen bei dem in Fig. 1 gezeigten System eingesetzten Stützwinkel in einer Ansicht von oben;
- Fig. 4: den Stützwinkel gemäß Fig. 3 in einer teilgeschnittenen perspektivischen Ansicht;

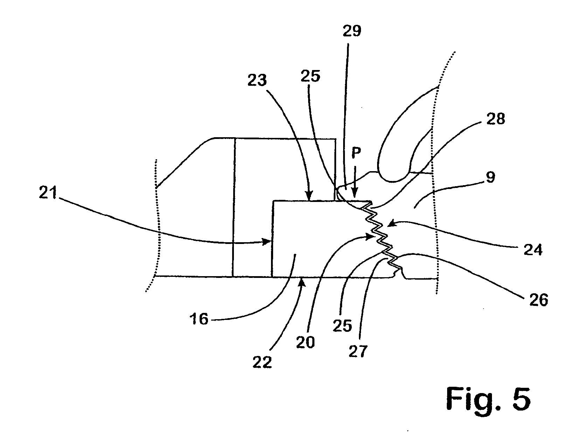

- Fig. 5: einen Ausschnitt A von Fig. 2 in einer vergrößerten Ansicht.

Das System 1 zum Befestigen einer Schiene 2 auf einem festen, durch eine Betonplatte gebildeten festen Untergrund 3 umfasst eine elastische Zwischenplatte 4, die unmittelbar auf der durchgehend ebenen Oberfläche 5 des festen Untergrunds 3 aufliegt.

Auf der Zwischenplatte 4 liegt eine aus Stahl gefertigte Grundplatte 6, die die Zwischenplatte 4 abdeckt und die im praktischen Einsatz beim Überfahren der Schiene 2 durch ein hier nicht gezeigtes Schienenfahrzeug auftretenden, über die Schiene 2 auf die Grundplatte 6 wirkenden Belastungen auf die Zwischenplatte 4 verteilt.

Auf die Grundplatte 6 ist eine weitere Zwischenlage 7 aufgelegt. Deren Breite entspricht höchstens der Breite des Schienenfußes 8 der Schiene, der mit seiner Unterseite auf der Zwischenlage 7 steht.

Um eine gegebenenfalls erforderliche Neigung der Schiene 2 gegenüber der ebenen Oberfläche 5 des festen Untergrunds 3 einzustellen, kann die Grundplatte 6 eine keilförmige Querschnittsform aufweisen, wobei die dem Schienenfuß 8 zugeordnete Oberseite mit der der Zwischenplatte 4 zugeordneten Unterseite der Grundplatte 6 einen spitzen Winkel einschließt.

Zur seitlichen Abstützung der Schiene 2 gegenüber den beim Überfahren auftretenden Querkräften ist beidseits des Schienenfußes 8 jeweils eine Führungsplatte 9,10 angeordnet. Die Führungsplatten 9,10 weisen jeweils eine an dem Schienenfuß 8 anliegende Stützfläche 11 auf und stehen über entsprechende Stützabschnitte 11a auf der ebenen Oberfläche 5 des festen Untergrunds 3.

An ihrem unteren, an die Oberfläche des festen Untergrunds 3 angrenzenden Abschnitt kann an die Stützfläche 11 der Führungsplatten 9,10 ein hier nicht dargestellter nockenartiger Vorsprung angeformt sein, der in eine entsprechend geformte, hier ebenfalls nicht gezeigte Ausnehmung der elastischen Zwischenplatte 4 ragt und dabei unter die Grundplatte 6 greift. Auf diese Weise ist die jeweilige Führungsplatte 9,10 in vertikaler Richtung formschlüssig gehalten, so dass ein Abheben der Führungsplatten 9,10 vom Untergrund 3 auch bei Auftreten von in dieser Hinsicht ungünstigen Längskräften FL oder Querkräften FQ sicher ausgeschlossen ist.

Auf ihren freien Oberseiten weisen die Führungsplatten 9,10 in an sich bekannter Weise geformte Formelemente auf, die Führungen für jeweils eine als Federelement zum Verspannen der Schiene 1 auf dem festen Untergrund 3 dienende ω-förmige Spannklemme 12,13 bilden. Zum Spannen der Spannklemmen 12,13 sind Spannmittel in Form von Schrauben 14,15 vorgesehen, die in einen in den festen Untergrund 3 eingebrachten, hier nicht gezeigten Dübel eingeschraubt sind. Die Schrauben 14,15 belasten dabei über ihren Schraubenkopf den Mittelabschnitt der Spanneklemmen 12,13 in an sich bekannter Weise derart, dass die Spannklemme 12,13 über die freien, auf der Oberseite des Schienenfußes 8 aufliegenden Enden ihrer Arme die erforderliche federeleastische Haltekraft auf den Schienenfuß 8 ausüben.

Die seitliche Abstützung der Führungsplatten 9,10 erfolgt über jeweils ein Keilelement 16,17 gegen jeweils einen Stützwinkel 18,19.

Die Keilelemente 16,17 weisen jeweils eine in Draufsicht dreieckige Grundform auf, wobei ihre der jeweiligen Führungsplatte 9,10 zugeordnete, in Montagestellung parallel zur Schiene 2 verlaufende Anlagefläche 20 mit ihrer dem jeweiligen Stützwinkel 18,19 zugeordneten Anlagefläche 21 in Draufsicht einen spitzen Winkel α1 von 5 - 15° einschließt.

Gleichzeitig ist die Anlagefläche 20 derart gegenüber der Vertikalen geneigt, dass die dem festen Untergrund 3 zugeordnete untere Aufstandfläche 22 breiter ist als die freie Oberseite 23 der Keilelemente 16,17.

Der Anlagefläche 20 der Keileiemente 16,17 ist jeweils eine umgekehrt geneigte, parallel zu der Schiene 2 ausgerichtete Anlagefläche 24 der jeweiligen Führungsplatte 9,10 zugeordnet. In die Anlagefläche 20 der Keilelemente 16,17 und die Anlagefläche 24 der Führungsplatten 9,10 sind jeweils zueinander korrespondierende, sich linienartig über die Breite der betreffenden Flächen 20,24 erstreckende Vertiefungen 25,26 und Vorsprünge 27,28 so ausgeformt, dass die Vorsprünge 27 des jeweiligen Keilelements 16,17 in die Vertiefungen 26 der jeweiligen Führungsplatte 9,10 greifen und umgekehrt.

Auf diese Weise ist eine formschlüssige Verkoppelung der Keilelemente 16,17 mit der jeweiligen Führungsplatte 9,10 hergestellt. Die in Folge der auf die Führungsplatten 9,10 von der jeweiligen Schraube 14,15 ausgeübten Spannkräfte sich im Bereich dieser formschlüssigen Verkoppelung einstellende Reibung ist so hoch, dass Selbsthemmung eintritt und ein selbsttätiges Herauswandern der Keilelemente 16,17 aus ihrer Montagestellung auch bei hohen Querkräften sicher verhindert ist.

Die Verspannung der Führungsplatten 9,10 gegen das jeweilige Keilelement 16,17 wird zusätzlich jeweils durch einen in Richtung des jeweiligen Keilelements 16,17 vorstehenden Belastungsabschnitt 29 unterstützt, der an die jeweilige Führungsplatte 9,10 im Bereich des Übergangs ihrer Anlagefläche 24 zu ihrer Oberseite gebildet ist. Der Belastungsabschnitt 27 ist dabei so geformt und ausgelegt, dass er bei fertig montierten und verspannten Führungsplatten 9,10 eine Druckkraft P auf das jeweilige Keilelement 16,17 ausübt.

Um die exakte Ausrichtung der Keilelemente 16,17 relativ zu den ihnen zugeordneten Führungsplatten 9,10 zu vereinfachen, sind auf den Keilelementen 16,17 und den Führungsplatten 9,10 Markierungen 28 vorgesehen, die ein Ablesen der jeweiligen relativen Lage erleichtern.

Die Stützwinkel 18,19 sind jeweils einstückig aus einem faserverstärkten Kunststoff hergestellt. Sie weisen eine an der Anlagefläche 21 des ihnen jeweils zugeordneten Keilelements 16,17 anliegende Stützfläche 31 auf, deren Höhe größer als die Höhe der Keilelemente 16,17 ist. Die Stützfläche 31 ist an der freien Stirnseite eines Stützabschnitts 32 der Stützwinkel 18,19 ausgebildet, der rechtwinklig zu einem auf der Oberfläche 5 des festen Untergrunds 3 aufliegenden Grundabschnitt 33 der Stützwinkel 18,19 ausgerichtet ist.

Gegenüber dem Grundabschnitt 33 ist der Stützabschnitt 32 gegen den Grundabschnitt 33 über drei im Wesentlichen rechtwinklig von ihm abgehende, in der Seitenansicht dreiecksförmige Versteifungsabschnitte 34,35,36 abgestützt, deren freie Oberseite von der Oberseite des Stützabschnitts 32 ausgehend schräg nach unten verläuft. Von den Versteifungsabschnitten 34,35,36 ist jeweils einer am äußeren Rand und der andere in der Mitte der Stützwinkel 18,19 ausgebildet.

Im Bereich der zwischen den Versteifungsabschnitten 34,35,36 verbleibenden freien Räume ist in den Grundabschnitt 33 der Stützwinkel 18,19 jeweils eine Durchgangsöffnung 37,38 eingeformt. Die Mittelpunkte dieser Durchgangsöffnungen 37,38 weisen einen derart unterschiedlichen Abstand zu der Stützfläche 31 der Stützwinkel 18,19 auf, dass in der Draufsicht gesehen die Verbindungslinie der Mittelpunkte der Durchgangsöffnungen 37,38 mit der Stützfläche 31 einen spitzen Winkel α2 einschließen, der genauso groß ist wie der von der Anlagefläche 21 und der Anlagefläche 20 der Keilelemente 16,17 eingeschlossene Winkel α1. Auf diese Weise kann der jeweilige Stützwinkel 18,19 unter Verwendung von zwei in den festen Untergrund 3 eingesetzten, hier nicht sichtbaren Dübeln, die auf einer parallel zur Schiene 2 verlaufenden Linie angeordnet sind, ohne Weiteres so befestigt werden, dass seine Stützfläche 31 formschlüssig an der ihr zugeordneten Anlagefläche 21 des jeweiligen Keilelements 16,17 anliegt.

Die an der Unterseite des Grundabschnitts 33 gebildete Aufstandsfläche der Stützwinkel 18,19 ist jeweils mit einer den Reibungswiderstand erhöhenden Schicht 39 belegt. Diese kann aus einem Gummimaterial bestehen, das unmittelbar auf den Grundabschnitt 33 aufvulkanisiert sein kann, um eine möglichst einfache Montage zu ermöglichten, oder erst bei der Montage selbst als lose Zwischenlage zwischen den jeweiligen Stützwinkel 18,19 und den festen Untergrund 3 gelegt wird.

Jede der Durchgangsöffnungen 37,38 ist eine in Draufsicht kreisförmige Aufnahme 40 zugeordnet, die in die Oberseite des Grundabschnitts 33 eingeformt ist und deren Mittelpunkt fluchtend zum Mittelpunkt der Durchgangsöffnungen 37,38 ausgerichtet ist. In den Aufnahmen 40 sitzt jeweils ein als Spannelement dienender Ring 41,42, der aus einem federnd elastischen Kunststoffmaterial gefertigt ist. Die Höhe der Ringe 41,42 ist dabei so bemessen, dass die Ringe im vormontierten Zustand über den Rand der jeweiligen Aufnahme 40 hinausstehen.

Zu der Montage der Stützwinkel 18,19 wird jeweils eine Schraube 43,44 durch die Durchgangsöffnungen 37,38 gesteckt und in die darunter angeordneten, hier nicht sichtbaren Dübel eingeschraubt. Sobald ihr Schraubenkopf auf den elastischen Ringen 41,42 aufliegt, werden die Ringe 41,42 bei fortgesetzter Schraubbewegung zusammengepresst, so dass sie eine gegen die von der jeweiligen Schraube 43,44 ausgeübte Spannkraft gerichtete elastische Rückstellkraft ausüben. Auf diese Weise ist ein sicherer Halt der Schrauben 43,44 und der Stützwinkel 18,19 auch unter ungünstigen Bedingungen stets gewährleistet.

Um den zwischen der jeweiligen Führungsplatte 9,10 und der Stützfläche 31 des ihr jeweils zugeordneten Stützwinkels 18,19 vorhandenen Raum sicher zu füllen, kann das jeweils zwischen dem betreffenden Stützwinkel 18,19 und der jeweiligen Führungsplatte 9,10 angeordnete Keilelement 16,17 längs der Schiene 2 verschoben werden. Dazu wird die Schraube 14,15, die die jeweilige Führungsplatte 9,10 gegen den festen Untergrund 3 verspannt, soweit gelöst, dass die Selbsthemmung im Bereich der formschlüssigen Verkoppelung des jeweiligen Keilelements 16,17 mit der jeweiligen Führungsplatte 9,10 sich löst und das betreffende Keilelement 16,17 verschoben werden kann. Sobald es beidseitig formschlüssig an der Anlagefläche 31 des jeweiligen Stützwinkels 18,19 und der Anlagefläche 24 der jeweiligen Führungsplatte 9,10 sitzt, wird die jeweilige Befestigungsschraube 14,15 wieder angezogen, bis die jeweilige Spannklemme 12,13 die erforderliche Haltekraft auf den Schienenfuß 8 ausübt und - damit einhergehend - die Selbsthemmung zwischen dem jeweiligen Keilelement 16,17 und der jeweiligen Führungsplatte 9,10 wieder hergestellt ist.

Auf diese Weise kann besonders einfach eine Anpassung des Befestigungssystems 1 an die jeweilige relative Position der Schiene 2 und der Stützwinkel 18,19 vorgenonsnen werden, ohne dass dazu das System 1 in seine Einzelteile zerlegt werden muss.

### BEZUGSZEICHEN

- 1: System zum Befestigen einer Schiene 2
- 2: Schiene
- 3: fester Untergrund 3
- 4: elastische Zwischenplatte
- 5: ebene Oberfläche des festen Untergrunds 3
- 6: Grundplatte
- 7: Zwischenlage
- 8: Schienenfuß
- 9,10: Führungsplatten
- 11: Stützfläche der Führungsplatten 9,10
- 11a: Stützabschnitte der Führungsplatten 9,10
- 12,13: Spannklemmen
- 14,15: Schrauben
- 16,17: Keilelemente
- 18,19: Stützwinkel
- 20: Anlagefläche der Keilelemente 16,17
- 21: Anlagefläche der Stützwinkel 18,19
- 22: untere Aufstandfläche der Keilelemente 16,17
- 23: Oberseite der Keilelemente 16,17
- 24: Anlagefläche der Führungsplatten 9,10
- 25,26: Vertiefungen
- 27,28: Vorsprünge
- 29: Belastungsabschnitt
- 30: Markierungen
- 31: Stützfläche der Stützwinkel 18,19
- 32: Stützabschnitt der Stützwinkel 18,19
- 33: Grundabschnitt der Stützwinkel 18,19
- 34-36: Versteifungsabschnitte der Stützwinkel 18,19
- 37,38: Durchgangsöffnungen
- 39: Reibungswiderstand erhöhende Schicht
- 40: Aufnahmen
- 41,42: elastische Ringe
- 43,44: Schrauben

- α1,α2: Winkel
- FL: Längskräfte
- FQ: Querkräften

## Patentansprüche

1. System zum Befestigen einer Schiene (2) auf einem ebenen festen Untergrund (3) mit einer Führungsplatte (9,10) zum seitlichen Abstützen der zu befestigenden Schiene (2), mit einem Federelement (12,13), welches auf der Führungsplatte (9,10) abgestützt ist und mindestens einen Federarm aufweist, der eine elastische Haltekraft auf den Fuß (8) der Schiene (2) ausübt, und mit einem Spannmittel (14,15) zum Spannen des Federelements (12,13), wobei ein Stützwinkel (18,19) vorgesehen ist, der mit dem festen Untergrund (3) verbindbar ist und eine Anlagefläche (31) besitzt, gegen die die Führungsplatte (9,10) auf ihrer vom Schienenfuß (8) abgewandten Seite abgestützt ist, **dadurch gekennzeichnet, dass** der Stützwinkel (18,19) aus einem Kunststoffmaterial gefertigt ist.

2. System nach Anspruch 1, **dadurch gekennzeichnet, dass** der Stützwinkel (18,19) aus Polyolefine oder Polyamid hergestellt ist.

3. System nach Anspruch 1 oder 2, **dadurch gekennzeichnet, dass** das Kunststoffmaterial Verstärkungsfasern enthält.

4. System nach einem der voranstehenden Ansprüche, **dadurch gekennzeichnet, dass** in die der Oberfläche (5) des festen Untergrunds (3) zugeordnete untere Aufstandfläche des Stützwinkels (18,19) eine raue Struktur eingeformt ist.

5. System nach Anspruch 4, **dadurch gekennzeichnet, dass** die raue Struktur im Querschnitt sägezahnartig geformt ist.

6. System nach einem der Ansprüche 4 oder 5, **dadurch gekennzeichnet, dass** parallel zu der Anlagefläche (31) verlaufende linienförmige Vertiefungen in die Aufstandfläche des Stützwinkels (18,19) eingeformt sind.

7. System nach einem der voranstehenden Ansprüche, **dadurch gekennzeichnet, dass** zwischen der Aufstandfläche des Stützwinkels (18,19) und der Oberfläche des festen Untergrunds positionierte, den Reibungskoeffizienten zwischen Aufstandfläche des Stützwinkels (18,19) und Oberfläche (5) des festen Untergrunds erhöhende Zwischenlage (39) angeordnet ist.

8. System nach Anspruch 7, **dadurch gekennzeichnet, dass** die Zwischenlage fest mit der Aufstandfläche des Stützwinkels (18,19) verbunden ist.

9. System nach einem der voranstehenden Ansprüche, **dadurch gekennzeichnet, dass** der Stützwinkel (18,19) eine Durchgangsöffnung (37,38) für eine Befestigungsschraube (43,44) besitzt und ein aus einem elastischen Kunststoffmaterial gefertigtes Spannelement (41,42) vorgesehen ist, dass in Montagestellung die durch die Durchgangsöffnung (37,38) gesteckte Befestigungsschraube (43,44) mit einer gegen die von der Befestigungsschraube (43,44) ausgeübte Spannkraft gerichtete Rückstellkraft beaufschlagt.

10. System nach einem der voranstehenden Ansprüche, **dadurch gekennzeichnet, dass** an dem Stützwinkel (18,19) Mittel vorgesehen sind, welche eine Befestigung des Stützwinkels (18,19) in einer Position relativ zu der zu befestigenden Schiene (2) erlauben, in der die Anlagefläche des Stützwinkels (18,19) unter einem Winkel (α1,α2) zur Längsachse der Schiene (2) ausgerichtet ist.

11. System nach Anspruch 10, **dadurch gekennzeichnet, dass** die Mittel durch zwei in den Stützwinkel (18,19) eingeformte Durchgangsöffnungen (37,38) gebildet sind, durch die jeweils eine Befestigungsschraube (43,44) derart steckbar ist, dass die eine Befestigungsschraube (44) einen sich von der anderen Befestigungsschraube (43) unterscheidenden Abstand zu der Anlagefläche (31) des Stützwinkels (18,19) besitzt.

12. System nach einem der voranstehenden Ansprüche, **dadurch gekennzeichnet, dass** der Stützwinkel (18,19) ein Mittel zum Einstellen seiner Position in einer normal zu seiner Anlagefläche (31) ausgerichteten Richtung aufweist.

13. System nach einem der voranstehenden Ansprüche, **dadurch gekennzeichnet, dass** die Führungsplatte (9,10) über ein in Längsrichtung der zu befestigenden Schiene (2) spitz zulaufendes Keilelement (16,17) gegen die Anlagefläche (31) des Stützwinkels (18,19) abgestützt ist.

14. System nach Anspruch 13, **dadurch gekennzeichnet, dass** das Keilelement (16,17) eine erste der Führungsplatte (9,10) zugeordnete Anlagefläche (20) und eine dem Stützwinkel (18,19) zugeordnete zweite Anlagefläche (21) besitzt, die mit der ersten Anlagefläche (20) einen spitzen Winkel (α1) einschließt.

15. System nach einem der Ansprüche 13 oder 14, **dadurch gekennzeichnet, dass** die der Führungsplatte (9,10) zugeordnete Anlagefläche (20) mindestens einen Vor- und/oder Rücksprung (25,27) aufweist, der formschlüssig mit mindestens einem korrespondierend geformten Vor- und/oder Rücksprung (26,28) verkoppelbar ist, der an der der betreffenden Anlagefläche (20) des Keilelements (16,17) zugeordneten Anlagefläche (24) der Führungsplatte (9,10) geformt ist.

16. System nach Anspruch 15, **dadurch gekennzeichnet, dass** mehr als ein Vor- und/oder Rücksprung (25,27) an der der Führungsplatte (9,10) zugeordneten Anlagefläche (20) des Keilelements (16,17) ausgebildet ist.

17. System nach einem der Ansprüche 15 oder 16, **dadurch gekennzeichnet, dass** die Vor- und/oder Rücksprünge (25,26,27,28) im Montagezustand des Keilelements (16,17) parallel zur Oberseite (5) des ebenen festen Untergrunds (3) verlaufen.

18. System nach einem der Ansprüche 13 bis 17, **dadurch gekennzeichnet, dass** die Anlageflächen (20,21) des Keilelements (16,17) einen Winkel von 5 - 15 ° einschließen.

19. System nach Anspruch 13 - 18, **dadurch gekennzeichnet, dass** an der Führungsplatte (9) ein Belastungsabschnitt (29) gebildet ist, der in der Montagestellung auf der freien Oberseite des Keilelements (16,17) aufliegt.

20. System nach einem der voranstehenden Ansprüche, **dadurch gekennzeichnet, dass** eine Grundplatte (6) vorgesehen ist, über die die zu befestigende Schiene (2) auf dem festen Untergrund (3) abstützbar ist.

21. System nach Anspruch 20, **dadurch gekennzeichnet, dass** die Grundplatte (6) eine dem festen Untergrund (3) zugeordnete Aufstandfläche und eine der Unterseite des Schienenfußes (8) der zu befestigenden Schiene (2) zugeordnete Stützfläche aufweist und **dass** die Stützfläche der Grundplatte (6) im Querschnitt betrachtet unter einem Winkel gegenüber der Aufstandfläche der Grundplatte (6) geneigt ausgerichtet ist.

22. System nach einem der voranstehenden Ansprüche, **dadurch gekennzeichnet, dass** an der der zu befestigenden Schiene (2) zugeordneten Seite der Führungsplatte (9,10) ein Vorsprung ausgebildet ist, der im Montagezustand die Grundplatte (6) oder den Schienenfuß (8) untergreift.

23. System nach Anspruch 22, **dadurch gekennzeichnet, dass** eine elastische Zwischenlage (4) vorgesehen ist, auf der die Grundplatte (6) liegt, und in die elastische Zwischenlage eine Ausnehmung eingeformt ist, in die der Vorsprung der Führungsplatte (9,10) in Montagestellung greift.

## Claims

1. A system for securing a rail (2) to a level solid ground (3), including a guide plate (9, 10), for providing lateral support for the rail (2) to be secured, a spring element (12, 13) supported on the guide plate (9, 10) and having at least one spring arm exerting an elastic retaining force on the base (8) of the rail (2), and tensioning means (14, 15) for tensioning the spring element (12, 13), a support angle (18, 19) being provided, which is connectable to the solid ground (3) and which has a bearing surface (31) against which the guide plate (9, 10) rests on the side facing away from the rail base (8), **characterised in that** the support angle (18, 19) is made from a plastics material.

2. System as claimed in Claim 1, **characterised in that** the support angle (18, 19) is made from polyolefin or polyamide.

3. System as claimed in Claim 1 or 2, **characterised in that** the plastics material includes reinforcement fibres.

4. System as claimed in any one of the preceding claims, **characterised in that** a rough structure is integrally formed into the bottom contact surface of the support angle (18, 19) associated with the surface (5) of the solid ground (3).

5. System as claimed in Claim 4, **characterised in that** the rough structure is formed to have a serrated cross-section.

6. System as claimed in Claim 4 or 5, **characterised in that** linear indentations running parallel to the contact surface (31) are integrally formed into the contact surface of the support angle (18, 19).

7. System as claimed in any one of the preceding claims, **characterised in that** an intermediate layer (39) is provided, which is positioned between the contact surface of the support angle (18, 19) and the surface of the solid ground and which increases the friction coefficient between the contact surface of the support angle (18, 19) and the surface (5) of the solid ground.

8. System as claimed in Claim 7, **characterised in that** the intermediate layer is firmly connected with the contact surface of the support angle (18, 19).

9. System as claimed in any one of the preceding claims, **characterised in that** the support angle (18, 19) has a through-opening (37, 38) for the passage of a fixing bolt (43, 44) and that a tensioning element (41, 42) made from an elastic plastics material is provided, and **in that** in the mounting position, the fixing bolt (43, 44) inserted in the through-opening (37, 38) exerts a return force acting against the clamping force exerted by the fixing bolt (43, 44).

10. System as claimed in any one of the preceding claims, **characterised in that** means are provided on the support angle (18, 19), which allow the support angle (18, 19) to be fastened in a position relative to the rail (2) to be secured, in which the bearing surface of the support angle (18, 19) is aligned at an angle (α1, α2) to the longitudinal axis of the rail (2).

11. System as claimed in Claim 10, **characterised in that** the means are formed by two through-openings (37, 38) integrally formed into the support angle (18, 19), through each of which a fixing bolt (43, 44) may be inserted such that one of the fixing bolts (44) has a distance from the bearing surface (31) of the support angle (18, 19) which is different from that of the other fixing bolt (43).

12. System as claimed in any one of the preceding claims, **characterised in that** the support angle (18, 19) has means for adjusting its position in a direction normal to its bearing surface (31).

13. System as claimed in any one of the preceding claims, **characterised in that** the guide plate (9, 10) is supported against the bearing surface (31) of the support angle (18, 19) via a wedge element (16, 17) tapered in the longitudinal direction of the rail (2) to be secured.

14. System as claimed in Claim 13, **characterised in that** the wedge element (16, 17) has a first bearing surface (20) associated with the guide plate (9, 10) and a second bearing surface (21) associated with the support angle (18, 19), which forms an acute angle (α1) with the first bearing surface (20).

15. System as claimed in Claim 13 or 14, **characterised in that** the bearing surface (20) associated with the guide plate (9, 10) has at least one projection and/or recess (25, 27) which may be positively coupled with at least one correspondingly shaped projection and/or recess (26, 28) integrally formed on the bearing surface (24) of the guide plate (9, 10), which is associated with the respective bearing surface (20) of the wedge element (16, 17).

16. System as claimed in Claim 15, **characterised in that** more than one projection and/or recess (25, 27) is formed on the bearing surface (20) of the wedge element (16, 17), which is associated with the guide plate (9, 10).

17. System as claimed in Claim 15 or 16, **characterised in that** in the mounting condition of the wedge element (16, 17), the projections and/or recesses (25, 26, 27, 28) extend parallel to the top surface (5) of the level ground (3).

18. System as claimed in any one of Claims 13 to 17, **characterised in that** the bearing surfaces (20, 21) of the wedge element (16, 17) form an angle of 5° to 15°.

19. System as claimed in Claims 13 to 18, **characterised in that** a loading section (29) is provided on the guide plate (9), which in the mounting position rests on the free top surface of the wedge element (16, 17).

20. System as claimed in any one of the preceding claims, **characterised in that** a base plate (6) is provided, through which the rail (2) to be secured may be supported on the solid ground (3).

21. System as claimed in Claim 20, **characterised in that** the base plate (6) has a contact surface associated with the solid ground (3) and a support surface associated with the bottom surface of the rail base (8) of the rail (2) to be secured, and **in that** the support surface of the base plate (6) is oriented, viewed in cross-section, inclined at an angle to the contact surface of the base plate (6).

22. System as claimed in any one of the preceding claims, **characterised in that** a projection is provided on that side of the guide plate (9, 10), which is associated with the rail (2) to be secured, which projection engages in the base plate (6) or the rail base (8) when in the mounting condition.

23. System as claimed in Claim 22, **characterised in that** an elastic intermediate layer (4) is provided, on which the base plate (6) lies, and a recess is integrally formed into the elastic intermediate layer, which in the mounting condition is engaged by the projection of the guide plate (9, 10).

## Revendications

1. Système de fixation d'un rail (2) sur un soubassement (3) rigide, plan, avec une plaque de guidage (9, 10) pour soutenir latéralement le rail (2) à fixer, avec un élément élastique (12, 13), qui prend appui sur la plaque de guidage (9, 10) et est doté d'au moins un bras élastique, qui exerce une force de maintien élastique sur le patin (8) du rail (2), et avec un moyen de serrage (14, 15) pour le serrage de l'élément élastique (12, 13), sachant qu'est prévue une cornière de support (18, 19), qui peut être reliée au soubassement rigide (3) et est dotée d'une surface d'appui (31) contre laquelle s'appuie la plaque de guidage (9, 10) avec sa face opposée au patin (8) du rail, **caractérisé en ce que** la cornière de support (18, 19) est fabriquée en matériau synthétique.

2. Système selon la revendication 1, **caractérisé en ce que** la cornière de support (18, 19) est fabriquée en polyoléfine ou en polyamide.

3. Système selon revendication 1 ou 2, **caractérisé en ce que** le matériau synthétique contient des fibres de renfort.

4. Système selon l'une des revendications précédentes, **caractérisé en ce que**, dans la face de contact de la cornière de support (18, 19), associée à la face supérieure (5) du soubassement rigide (3) est formée une structure rugueuse.

5. Système selon la revendication 4, **caractérisé en ce que** la structure rugueuse est dotée d'une section transversale en forme de dents de scie.

6. Système selon l'une des revendications 4 ou 5, **caractérisé en ce que** des creux linéaires, qui s'étendent parallèlement à la surface d'appui (31), sont formés dans la surface de contact de la cornière de support (18, 19).

7. Système selon l'une des revendications précédentes, **caractérisé en ce qu'**un intercalaire (39) augmentant le coefficient de friction entre la surface de contact de la cornière de support (18, 19) et la face supérieure (5) du soubassement rigide est positionné entre la surface de contact de la cornière de support (18, 19) et la face supérieure du soubassement rigide.

8. Système selon la revendication 7, **caractérisé en ce que** l'intercalaire est relié fixement à la surface de contact de la cornière de support (18, 19).

9. Système selon l'une des revendications précédentes, **caractérisé en ce que** la cornière de support (18, 19) est dotée d'une ouverture de passage (37, 38) pour une vis de fixation (43, 44) et qu'est prévu un élément de serrage élastique (41, 42), fabriqué en matériau synthétique, qui, dans la position de montage, soumet la vis de fixation (43, 44), insérée dans l'ouverture de passage (37, 38), à une force de rappel agissant à l'encontre de la force de serrage exercée par la vis de fixation (43, 44).

10. Système selon l'une des revendications précédentes, **caractérisé en ce que**, sur la cornière de support (18, 19) sont prévus des moyens, qui permettent une fixation de la cornière de support (18, 19) dans une position, par rapport au rail (2) à fixer, dans laquelle la face d'appui de la cornière de support (18, 19) est orientée sous un angle (α1*,* α2) par rapport à l'axe longitudinal du rail (2).

11. Système selon la revendication 10, **caractérisé en ce que** les moyens sont formés par deux ouvertures de passage (37, 38), formées dans la cornière de support (18, 19), par chacune desquelles peut être introduite une vis de fixation (43, 44), de sorte que l'une (44) des vis de fixation se trouve à une distance de la surface d'appui (31) de la cornière de support (18,19) qui diffère de celle de l'autre vis de fixation (43).

12. Système selon l'une des revendications précédentes, **caractérisé en ce que** la cornière de support (18, 19) est dotée d'un organe, destiné à ajuster sa position dans une direction normale par rapport à sa surface d'appui (31).

13. Système selon l'une des revendications précédentes, **caractérisé en ce que** la plaque de guidage (9, 10) s'appuie contre la surface d'appui (31) de la cornière de support (18, 19) par l'intermédiaire d'une cale (16, 17) s'effilant dans la direction longitudinale du rail (2) à fixer.

14. Système selon la revendication 13, **caractérisé en ce que** la cale (16, 17) est dotée d'une première surface d'appui (20) associée à la plaque de guidage (9, 10), et d'une deuxième surface d'appui (21), qui, associée à la cornière de support (18, 19), forme un angle aigu (α1) avec la première surface d'appui (20).

15. Système selon l'une des revendications 13 ou 14, **caractérisé en ce que** la surface d'appui (20), associée à la plaque de guidage (9, 10), est dotée d'au moins d'une saillie et / ou d'un retrait (25, 27), qui peut être couplé par emboîtement avec au moins une saillie et / ou un retrait de forme correspondante (26, 28), qui est formé sur la surface d'appui (24) de la plaque de guidage (9, 10), associée à la première surface d'appui (20) de la cale (16, 17).

16. Système selon la revendication 15, **caractérisé en ce que** plus d'une saillie et / ou d'un retrait (25, 27) sont formés sur la première surface d'appui (20) de la cale (16, 17) associée à la plaque de guidage (9, 10).

17. Système selon l'une des revendications 15 ou 16, **caractérisé en ce que** les saillies et / ou les retraits (25, 26, 27, 28), dans l'état de montage de la cale (16, 17), s'étendent parallèlement à la face supérieure (5) du soubassement rigide, plan (3).

18. Système selon l'une des revendications 13 à 17, **caractérisé en ce que** les surfaces d'appui (20, 21) de la cale (16, 17) forment un angle de 5 à 15 °.

19. Système selon l'une des revendications 13 à 18, **caractérisé en ce que**, sur la plaque de guidage (9), est formée une section de charge (29), qui, dans la position de montage, prend appui sur la surface libre de la cale (16, 17).

20. Système selon l'une des revendications précédentes, **caractérisé en ce qu'**est prévue une plaque de base (6), par l'intermédiaire de laquelle le rail (2) à fixer peut prendre appui sur le soubassement rigide (3).

21. Système selon la revendication 20, **caractérisé en ce que** la plaque de base (6) est dotée d'une surface de contact, associée au soubassement rigide (3), et d'une surface de support, associée à la face inférieure du patin (8) du rail (2) à fixer, et que la surface de support de la plaque de base (6), vue en section transversale, est inclinée par rapport à la surface de contact de la plaque de base (6).

22. Système selon l'une des revendications précédentes, **caractérisé en ce que**, sur la face de la plaque de guidage (9, 10), associée au rail (2) à fixer, est formée une saillie, qui, à l'état monté, se loge sous la plaque de base (6) ou le patin (8) du rail.

23. Système selon la revendication 22, **caractérisé en ce qu'**est prévu un intercalaire élastique (4), sur lequel est posée la plaque de base (6), et que, dans ledit intercalaire élastique, est formé un évidement, dans lequel la saillie de la plaque de guidage (9, 10) s'engage dans la position de montage.
